# EUROPEAN PATENT SPECIFICATION

(11) **EP 1 719 929 B1**
(45) Date of publication and mention of the grant of the patent: **30.06.2010**
(21) Application number: 04807139.3
(22) Date of filing: 16.12.2004
(51) Int. Cl.: F16D 9/00, F16H 35/10, F16H 55/36

(54) **TORQUE TRANSMISSION DEVICE OF COMPRESSOR**
DREHMOMENTÜBERTRAGUNGSVORRICHTUNG FÜR VERDICHTER
DISPOSITIF DE TRANSMISSION DE COUPLE D UN COMPRESSEUR

(30) Priority: 10.02.2004 JP 2004032797
(43) Date of publication of application: 08.11.2006
(73) Proprietor: Valeo Thermal Systems Japan Corporation, Konan-machi, Osato-gun Saitama 3600193 (JP)
(72) Inventor: AMEMORI, Masanori c/o Valeo Thermal Systems Japan, Konan-machi Osato-gun, Saitama 360-0193 (JP); IMAI, Yuichi c/o Valeo Thermal Systems Japan, Konan-machi Osato-gun, Saitama 360-0193 (JP); IIZUKA, Makoto c/o Valeo Thermal Systems Japan, Konan-machi Osato-gun, Saitama 360-0193 (JP)
(74) Representative: Prinz & Partner
(86) International application number: PCT/JP2004/018780
(87) International publication number: WO 2005/075846

(56) References cited:
- DE-A1- 10 354 049
- JP-A- 8 319 945
- JP-A- 2001 041 308
- JP-A- 2002 054 711
- JP-A- 2002 349 596
- JP-A- 2004 263 795

## Description

### Technical Field

The present invention relates to a device that transmits torque in a clutchless compressor, which does not require an electromagnetic clutch.

### Background Art

While the size of the engine compartment is often reduced in recent years by adopting a structure in which auxiliary devices such as an alternator and a coolant compressor are driven via a single belt in recent years, this structure is problematic in that if the rotation of the clutchless compressor is disabled, the other auxiliary devices stop functioning.

Accordingly, in a clutchless compressor developed by the applicant of the present application and disclosed to the public, a groove extending along a virtual circle around the drive shaft is formed at a disk portion of the pulley, a plurality of holes are formed over a predetermined interval along the groove so as to use the areas between the holes as breakage portions, and if the rotation of the cam plate is disabled and a torque load equal to or greater than a predetermined level is applied to the breakage portions, the breakage portions break, stopping the transmission of the rotational motive force from the belt to the drive shaft. Even when the rotational motive force transmission stops, the rim of the pulley continues to rotate via a radial bearing, and thus, the functions of the auxiliary devices driven via the belt are not affected (see patent reference literature 1).

However, depending upon the particulars of the structure adopted in the clutchless compressor, parts constituting the torque transmission device may disengage from the torque transmission device and damage surrounding members when breakage occurs at the breakage portions formed at the torque transmission device in the clutchless compressor (hereafter referred to as "when a torque limiter is engaged in operation").

There is a structure known in the related art designed to prevent the parts constituting the torque transmission device disengaging from the torque transmission device (see patent reference literature 2).
Patent reference literature 1: Japanese Unexamined Patent Publication No. H8 - 319945
Patent reference literature 2: Japanese Unexamined Patent Publication No. 2002-349596

JP 2002 054 711 discloses the preamble of claim 1.

### Disclosure of the Invention

### Problems to be Solved by the Invention

However, there is another problem yet to be addressed in the structures disclosed in patent reference literature 1 and patent reference literature 2, in that dirt, water and the like may enter through the elongated holes formed between the breakage portions before the torque limiter is engaged and also through the gap formed at the breakage portions after the torque limiter is engaged. There is a further concern that contact between the surfaces of portions having broken away from each other so as to face opposite each other in the event of breakage due to decentered rotation or the like, may cause noise.

In addition, a problem arises in the structure disclosed in patent reference literature 2, in which the breakage portions are formed at the outer edge located at a relatively large distance from the drive shaft along the radial direction, in that as the torque limiter is engaged and the circumferential speed at the outer edge having become broken off and separated becomes relatively high, the outer edge may contact a surrounding member to result in noise or heat generation attributable to friction.

Accordingly, an object of the present invention is to provide a torque transmission device for a compressor that prevents parts constituting the torque transmission device from becoming disengaged after a torque limiter is engaged and breakage occurs, minimizes entry of foreign matter through elongated holes formed between the breakage portions prior to torque limiter engagement and also through the gap formed at the breakage portions after the torque limiter engagement, and minimizes the occurrence of noise and heat generation in the event of torque limiter engagement.

### Means for Solving the Problems

The torque transmission device in a compressor according to the present invention is defined in claim 1.

The first disk unit and the second disk unit may be linked to each other by, for instance, fastening them together with rivets or through welding (spot welding, beam welding, projection welding, etc.).

The torque transmission device in a compressor according to the present invention is further **characterized in that** the second disk unit includes a recessed area which recedes toward the compressor main unit, ranging from the area around a passing hole, at which the hub unit is inserted, to a position at which the second disk unit faces the breakage portions (claim 2).

A gap created by this recessed portion between the first disk unit and the second disk unit may be set to, for instance, 0.5 mm.

### Effect of the Invention

According to the present invention described above, as the torque limiter is engaged and a freed part that includes the broken piece ranging from the breakage portions to the outer edge of the first disk unit and the second disk unit would otherwise pass through front words along the axial direction, the portion of the second disk unit located toward the hub unit in the freed part contacts the remaining portion of the first disk unit ranging from the breakage portions toward the hub unit and, as a result, the freed part is prevented from falling out.

In addition, according to the present invention, the second disk unit is set toward the compressor main unit relative to elongated holes formed between the breakage portions so as to face opposite the elongated holes prior to torque limiter engagement and, as a result, entry of foreign matter such as water and dirt through the elongated holes into the compressor main unit is effectively prevented.

Furthermore, even when the torque limiter is engaged, the first disk unit separates into the broken piece constituting part of the freed part and the remaining portion and an annular gap is formed over a width of, for instance, a few millimeters between the broken piece and the remaining portion, foreign matter such as water and dirt is not allowed to enter the compressor main unit through the gap, since the second disk unit is present toward the compressor main unit so as to face opposite the gap.

Moreover, since the breakage portions formed at the first disk unit are located in relative proximity to the hub unit, the circumferential speed of the freed part remains relatively slow, thereby minimizing the occurrence of noise and the generation of heat attributable to friction against another member.

According to the present invention disclosed in claim 2, in particular, a gap of a specific size is created between a portion of the first disk units ranging from its breakage portions toward the hub unit and a portion of the second disk unit ranging from a position at which the second disk unit faces opposite the breakage portions to a position toward the hub unit and thus, after the first disk unit becomes separated over the breakage portion, the freed part is offset along the axial direction relative to the remaining part toward the side opposite from the compressor main unit. As a result, the contact area over which the surfaces at the separated portions facing opposite each other contact each other is reduced, which, in turn, prevents noise even more effectively.

### Brief Description of the Drawings

FIG. 1 is an exploded view of the torque transmission device in a compressor according to the present invention;
FIG. 2 presents a front view of the torque transmission device in a compressor in FIG. 1 in an assembled state;
FIG. 3 is a sectional view of the torque transmission device and the compressor in FIG. 2, taken along line I-I;
FIG. 4(a) is an enlargement of the area around the breakage portions prior to torque limiter engagement and FIG. 4(b) presents an enlargement of the area around the breakage portions following the torque limiter engagement.

### Explanation of Reference Numerals

- 1: torque transmission device
- 2: pulley
- 3: hub unit
- 4: first disk unit
- 5: second disk unit
- 10: compressor main unit
- 12: drive shaft
- 14: recessed portion
- 20: breakage portion
- 22: elongated hole

### Best Mode for Carrying Out the Invention

The following is an explanation of an embodiment of the present invention, given in reference to the drawings.

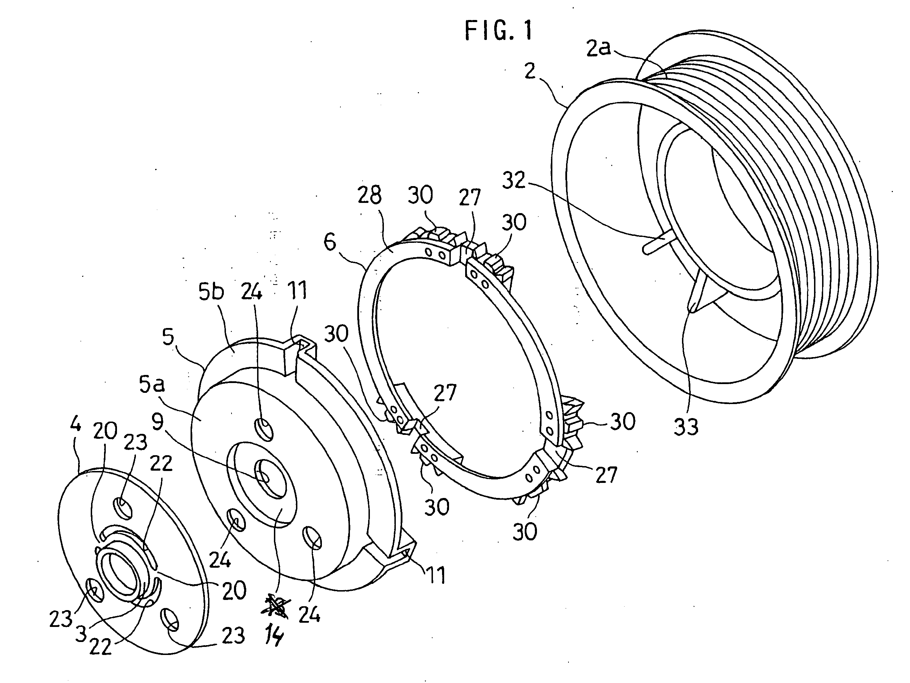

FIGS. 1 through 4 present an example of a torque transmission device 1 in a clutchless compressor, as achieved in an embodiment of the present invention. As shown in FIG. 1, the torque transmission device 1 includes as primary components thereof a pulley 2, a hub unit 3, a first disk unit 4, a second disk unit 5 and an elastic member 6 that functions as a torque limiter.

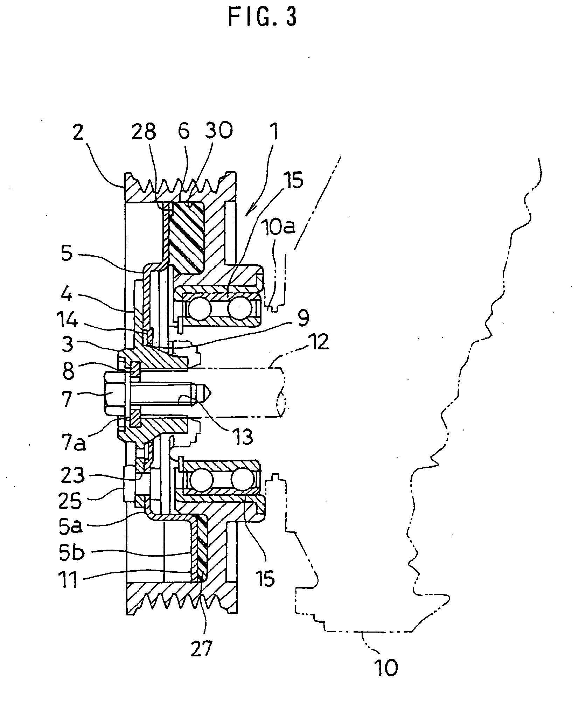

The pulley 2, which may be constituted of, for instance, a synthetic resin, is rotatably mounted at a boss portion 10a at a housing of a compressor main unit 10 via a radial bearing 15 fixed at the inner circumferential surface of the pulley 2, as shown in FIG. 3. In addition, a belt (not shown) is wound around an outer circumferential surface 2a of the pulley 2, so as to cause the pulley 2 to rotate around a drive shaft 12 on a drive force supplied from an engine (not shown).

The hub unit 3, which may be constituted of, for instance, a synthetic resin, is fixed via a bolt 7 onto the front end of the drive shaft 12 projecting further out beyond the housing of the compressor main unit 2. The hub unit 3 assumes a cylindrical shape so as to cover the side surface of the drive shaft 12 at its front end. The bolt 7 linking the hub unit 3 with the drive shaft 12 includes a flange 7a and is screwed into a screw hole 13 formed at the front end of the drive shaft 12 via a stopper 8.

A transmission means for transmitting the torque from the pulley 2 to the hub unit 3 is constituted by disposing the first disk unit 4 and the second disk unit 5 one on top of the other so as to range along the radius of the drive shaft 12 in the embodiment. Namely, the first disk unit 4, which is disposed further toward the front end of the drive shaft 12, is a thin metal disk formed as an integrated part of the hub unit 3. While the first disk unit 4 ranges substantially linearly along the radius of the drive shaft 12, the extent to which the first disk portion ranges is set so that the front end of the first disk portion does not touch the inner circumferential surface of the pulley 2 in the torque transmission device 1 in the assembled state.

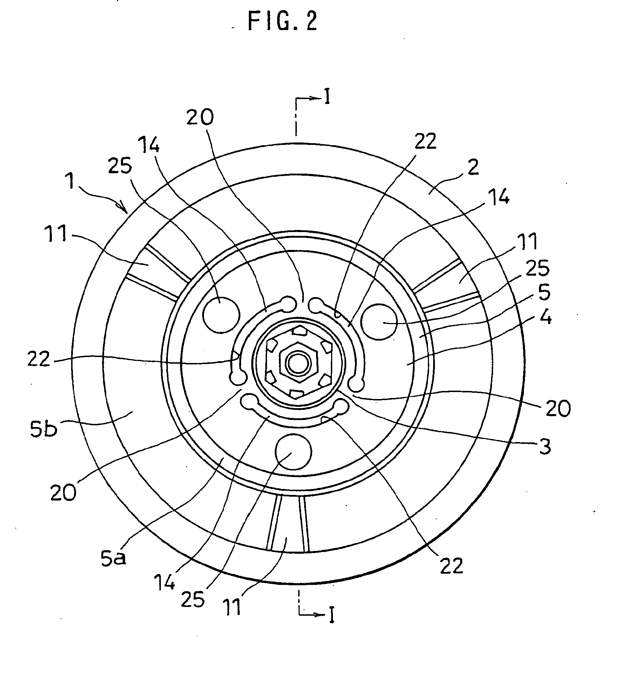

The first disk unit 4 also includes breakage portions 20, as shown in FIGS. 1 and 2. In the embodiment, a plurality of circular arc elongated holes 22 (three elongated holes in the embodiment) are formed at the disk portion 4 over a specific interval along the circumference of a virtual circle with a predetermined radius ranging around the drive shaft 12. The breakage portions 20 in the embodiment are formed between the elongated holes 22 and 22. The breakage portions 20 are formed at the first disk portion 4 at a position in relative proximity to the hub unit 3.

The second disk unit 5 is a metal unit independent of the hub unit 3 and the first disk unit 4, as shown in FIGS. 1 and 2. The second disk unit 5 includes a raised portion 5a and a flange 5b. The raised portion 5a has a circular surface area, which assumes a shape substantially identical to that of the first disk unit 4 but with a slightly larger diameter, and an upright side area ranging from the circumferential edge of the circular surface and has a substantially U-shaped section. The flange 5b extends from the terminating end of the side area of the raised portion 5a toward the outside with an outer edge thereof substantially touching the inner circumferential surface of the pulley 2.

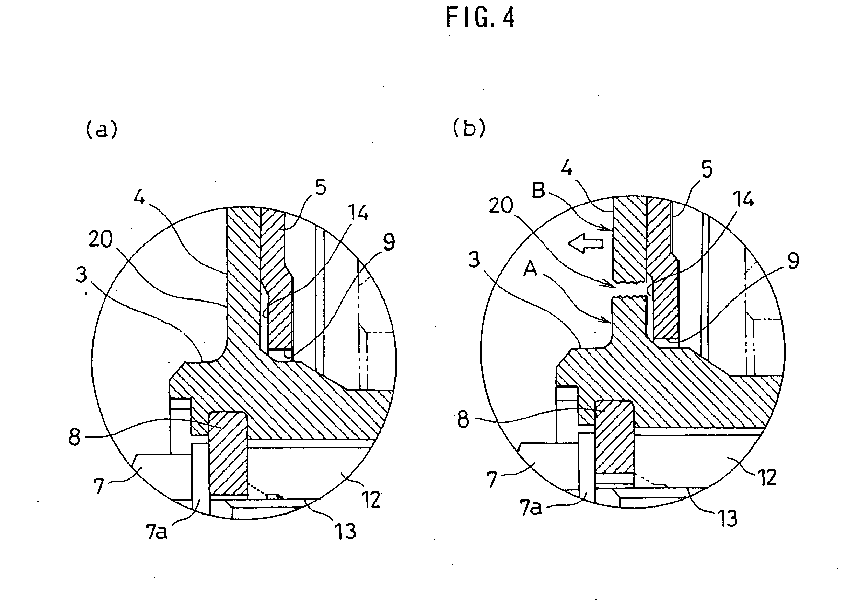

At center of the circular area of the raised portion 5a, a pass hole 9 through which the portion of the hub unit 3 ranging toward the compressor main unit 10 beyond the first disk unit can fit in is formed. It is to be noted that the outer circumferential surface of the hub unit 3 and the inner circumferential surface of the pass hole 9 do not contact each other and the hub unit is inserted in the pass hole with a gap (play), as shown in FIGS. 3 and 4. In addition, a plurality of recessed portions 11 extending radially from the drive shaft 12 over a specific interval are formed at the flange 5b. The recessed portions 11 are made to recede toward the compressor main unit 10 relative to the flat surface of the flange 5a¹.

As shown in FIGS. 1² and 3, recessed portions 14 assuming a circular arc shape and receding toward the compressor main unit 10 with a substantially U-shaped section are formed at the second disk unit 5 over an area ranging from the circumferential edge of the pass hole 9 toward the area facing opposite the breakage portions 20 and the elongated holes 22. The inner circumference-side end of the recessed portions 14, located toward the drive shaft 12, are set closer to the drive shaft 12 than the breakage portions 20. Thus, as the first disk unit 4 and the second unit disk unit 5 are assembled together, a gap ranging over, for instance, a space of 0.5 mm is formed between the portion of the first disk unit 4 over the area where the elongated holes 22 and the breakage portions 20 are present and the recessed portions 14 at the second disk unit 5, as shown in FIG. 4(a).

In addition, pass holes 23 and 24 that become communicated with each other as the first disk unit 4 and the second disk unit 5 are assembled together are respectively formed at the first disk unit 4 and the second disk unit 5 as shown in FIG. 1 in the embodiment. The first disk unit 4 and the second disk unit 5 are fastened together by inserting rivets 25 through the pass holes 23 and 24 as shown in FIG. 3. However, locking means other than the rivets 25 may be used instead and the first disk unit and the second disk unit may be locked together through welding (spot welding, beam welding, projection welding, etc.). The first disk unit 4 and the second disk unit 5 locked together are thus allowed to rotate as one.

With the first disk unit 4 and the second disk unit 5 structured as described above, the assembly of the first disk unit and the second disk unit is separated as shown in FIG. 4(b) into a remaining part A ranging from the breakage portions 20 at the first disk unit 4 toward the hub unit 3 (hereafter simply referred to as a remaining part A) and a freed part B that includes a broken-off piece ranging from the breakage portions 20 to the outer edge of the first disk unit 4 and the second disk unit 5 (hereafter simply referred to as a freed part B) over the boundary set through the breakage portions 20 as the torque limiter is engaged. As a result, the freed part B which would otherwise move toward the front end of the drive shaft 12 along the axial direction (along the direction indicated by the arrow in FIG. 4(b)) is not allowed to fall out since the second disk unit 5 at the freed part B comes into contact with the remaining part A.

At the same time, there is a gap created over a specific width (e.g., 0.5 mm) between the remaining part A and the freed part B, which allows the freed part B to move toward the front end of the drive shaft 12 along the axial direction by an extent matching the width of the gap (along the direction indicated by the arrow in FIG. 4(b)), reducing the area over which the surfaces facing opposite each other at the breakage portions 20 contact each other. In other words, the breakage surface at the remaining portion A and the breakage surface at the freed part B become offset from each other along the axis of the drive shaft 12 and even if the rotation of the freed part B becomes decentered along the radial direction, the surfaces facing opposite each other at the breakage portions 20 do not readily collide with each other to result in noise. In addition, since the breakage portions 20 at the first disk unit 4 are formed in relative proximity to the hub unit 3, the circumferential speed of the freed part B becomes relatively slow after the torque limiter is engaged, which, in turn, minimizes the occurrence of noise and heat generation attributable to friction against another member.

Furthermore, the surfaces of the recessed portions 14 at the second disk unit 5 face opposite the elongated holes 22 along the axial direction before the torque limiter engagement and thus, foreign matter such as water and dirt is not allowed to enter the compressor main unit 10 through the elongated holes 22. As the torque limiter is engaged and an annular gap is formed between the remaining part A and the first disk unit 4 at the freed part B along the radial direction over a width of, for instance, a few millimeters, the surfaces of the recessed portions 14 at the second disk unit 5 on the compressor main unit side face opposite this gap, preventing entry of foreign matter such as water and dirt into the compressor main unit 10 through the gap.

While the thickness of the first disk unit 4 needs to be relatively small at least around the breakage portions 20 where the breakage of the first disk unit occurs, the second disk unit 5 is disposed along the axis of the drive shaft 12 over the first disk unit 4 over this area with the small thickness. Since the second disk unit 5 does not need to break, its thickness can be set with a certain degree of freedom. In other words, the transmission means constituted with the first disk unit 4 and the second disk unit 5 assures the required level of strength that the compressor component needs to achieve under normal circumstances while providing a function of a torque limiter.

The elastic member 6, assuming a substantially annular shape as shown in FIG. 1, may be constituted of a synthetic rubber material. A plurality of recessed portions 27 (three recessed portions in the embodiment) that fit with the recessed portions 11 at the second disk unit 5 are formed at the elastic member 6. Thus, the elastic member 9 is able to rotate as one together with the first disk unit 4 and the second disk unit 5. The outer diameter of the elastic member 6 is slightly smaller than the inner diameter taken at the inner circumferential surface of the pulley 2, and flexible projections 30 are formed on the outer side along the radial direction from a main unit 28 so as to fill the gap between the elastic member 6 and the inner circumferential surface of the pulley. As a result, the impact resulting from the contact with the inner circumferential surface of the pulley 2 occurring as the first disk unit 4 and the second disk unit 5 rotate is buffered through the projections 30.

It is to be noted that while the pulley 2 basically assumes a structure similar to that in the related art described earlier, two projected portions 32 and 33 are readily formed on the two sides of a point that will be projected on the axial line relative to each projected portion of 11 at the second disk unit 5 and each recessed portion 27 at the elastic member 6, to be used as a support for the assembly of the first disk unit 4, the second disk unit 5 and the elastic member 6.

## Claims

1. A torque transmission device (1) for a compressor comprising:
a pulley (2) caused to rotate by torque transmitted from a drive source;
a hub (3) unit that is linked to a drive shaft (12) at a compressor main unit (10) and rotates synchronously with said drive shaft (12);
a first disk unit (4) formed so as to constitute an integrated unit together with said pulley (2) and said hub unit (3), which transmits the torque received at said pulley (2) to said hub unit (3); and
a second disk unit (5) that is provided as a member independent of said first disk unit (4), disposed coaxially with said drive shaft (12) further toward said compressor main unit (10) relative to said first disk unit (4) and linked to said first disk unit(4), wherein
said first disk unit (4) includes breakage portions (20) that break when the level of the transmission torque received at said pulley (2) becomes equal to or greater than a predetermined torque;
said breakage portions (20) are set in relative proximity to said drive shaft (12); and **characterized in:**
**that** an inner periphery of said second disk unit (5) directed toward said drive shaft (12) is set closer to said drive shaft (12) than said breakage portions (20) of said first disk unit (4).

2. A torque transmission device (1) for a compressor according to claim 1, **characterized in:**
**that** said second disk unit (5) includes a recessed area (14) which recedes toward said compressor main unit (10), ranging from the area around a passing hole (9), at which said hub unit (3) is inserted, toward a position at which said second disk unit (5) faces said breakage portion (20).

## Patentansprüche

1. Drehmomentübertragungsvorrichtung (1) für einen Verdichter, mit:
einer Riemenscheibe (2), die durch ein von einer Antriebsquelle übertragenes Drehmoment in Drehung versetzt wird;
einer Nabeneinheit (3), die mit einer Antriebswelle (12) an einer Verdichterhaupteinheit (10) verbunden ist und sich synchron mit der Antriebswelle (12) dreht;
einer ersten Scheibeneinheit (4), die so ausgebildet ist, dass sie zusammen mit der Riemenscheibe (2) und der Nabeneinheit (3) eine integrierte Einheit bildet, die das an der Riemenscheibe (2) erhaltene Drehmoment auf die Nabeneinheit (3) überträgt; und
einer zweiten Scheibeneinheit (5), die als von der ersten Scheibeneinheit (4) unabhängiges Element vorgesehen ist, koaxial zur Antriebswelle (12) und in Bezug auf die erste Scheibeneinheit (4) weiter zur Verdichterhaupteinheit (10) hin angeordnet und mit der ersten Scheibeneinheit (4) verbunden ist, wobei
die erste Scheibeneinheit (4) Sollbruchabschnitte (20) aufweist, die dann brechen, wenn die Höhe des an der Riemenscheibe (2) erhaltenen Übertragungsdrehmoments ein vorbestimmtes Drehmoment erreicht oder übersteigt;
wobei die Sollbruchabschnitte (20) relativ nahe an der Antriebswelle (12) gelegen sind; und **dadurch gekennzeichnet, dass**
ein der Antriebswelle (12) zugewandter Innenumfang der zweiten Scheibeneinheit (5) näher an der Antriebswelle (12) gelegen ist als die Sollbruchabschnitte (20) der ersten Scheibeneinheit (4).

2. Drehmomentübertragungsvorrichtung (1) für einen Verdichter gemäß Anspruch 1, **dadurch gekennzeichnet, dass**
die zweite Scheibeneinheit (5) einen ausgesparten Bereich (14) aufweist, der zur Verdichterhaupteinheit (10) hin zurückspringt und sich von dem Bereich um ein Durchgangsloch (9), in das die Nabeneinheit (3) eingesetzt ist, zu einer Stelle hin erstreckt, an der die zweite Scheibeneinheit (5) dem Sollbruchabschnitt (20) gegenüberliegt.

## Revendications

1. Dispositif de transmission de couple (1) pour compresseur, comportant :
une poulie (2) entraînée en rotation par un couple transmis à partir d'une source d'entraînement ;
une unité de moyeu (3) qui est reliée à un arbre d'entraînement (12) sur une unité principale de compresseur (10) et qui est en rotation synchrone avec l'arbre d'entraînement (12) ;
une première unité de disque (4) réalisée de manière à constituer une unité intégrée avec la poulie (2) et l'unité de moyeu (3), qui transmet à l'unité de moyeu (3) le couple reçu sur la poulie (2) ; et
une deuxième unité de disque (5) qui est prévue sous forme d'élément indépendant de la première unité de disque (4), qui est agencée coaxialement à l'arbre d'entraînement (12), plus loin en direction de l'unité principale de compresseur (10) par rapport à la première unité de disque (4), et qui est reliée à la première unité de disque (4),
la première unité de disque (4) présentant des tronçons de rupture (20) qui se rompent lorsque le niveau du couple de transmission reçu sur la poulie (2) devient égal ou supérieur à un couple prédéterminé ;
les tronçons de rupture (20) étant agencés à proximité relative de l'arbre d'entraînement (12) ; et **caractérisé en ce que :**
une périphérie intérieure de la deuxième unité de disque (5) dirigée vers l'arbre d'entraînement (12) est agencée plus près de l'arbre d'entraînement (12) que les tronçons de rupture (20) de la première unité de disque (4).

2. Dispositif de transmission de couple (1) pour compresseur selon la revendication 1, **caractérisé en ce que :**
la deuxième unité de disque (5) présente une zone évidée (14) qui est en retrait vers l'unité principale de compresseur (10) et qui s'étend depuis la zone autour d'un trou de passage (9) dans lequel l'unité de moyeu (3) est insérée, vers un endroit où la deuxième unité de disque (5) fait face au tronçon de rupture (20).
